# EUROPÄISCHE PATENTANMELDUNG

(11) **EP 1 514 736 A1**
(43) Veröffentlichungstag der Anmeldung: **16.03.2005**
(21) Anmeldenummer: 04021321.7
(22) Anmeldetag: 08.09.2004
(51) Int. Cl.: B60R 13/00

(54) **Abdeckkappe mit einer metallischen Plakette für Kraftfahrzeuge.**

(30) Priorität: 10.09.2003 DE 20314035 U
(71) Anmelder: Angell-Demmel GmbH, 88131 Lindau/B. (DE)
(72) Erfinder: Tämmerich, Rolf, 88161 Lindenberg (DE)
(74) Vertreter: Riebling, Peter, Dr.-Ing.

(57) **Zusammenfassung**

Abdeckkappe mit einer metallischen Plakette für Kraftfahrzeuge, bestehend aus einem aus Kunststoff bestehenden Trägerteil, auf dessen Vorderseite die Plakette befestigt ist, wobei die Verbindung zwischen der Plakette und dem Trägerteil aus am Außenumfang der Plakette angeformten, biegbaren Ansätzen besteht, die aus der Ebene der Plakette abgebogen sind und in das Kunststoffmaterial des Trägerteils eingreifen und dort eingegossen oder eingespritzt sind.

## Beschreibung

Die Erfindung betrifft eine Abdeckkappe mit einer metallischen Plakette für Kraftfahrzeuge nach dem Oberbegriff des Patentanspruchs 1.

Bei einer Vielzahl von Kraftfahrzeugen ist es üblich, am oder im Kühlergrill eine Plakette mit dem Fahrzeugemblem des Herstellers anzubringen. Diese Plakette besteht in der Regel aus einem Metallteil (z. B. aus einem Aluminiumblech), welches auf einer aus Kunststoff bestehenden Abdeckkappe befestigt ist. Die Befestigung erfolgt in der Gestalt, dass - bei einer etwa runden Plakette - in der vorderen Stirnseite der Abdeckkappe eine umlaufende Ringnut angeordnet war, in welcher die Plakette mit einem gleichfalls umlaufenden Ringansatz eingriff. Es handelte sich jedoch lediglich um eine Befestigung zur Lagensicherung zwischen der Plakette und der Abdeckkappe. Die eigentliche Befestigung zwischen der Plakette und der Abdeckkappe erfolgte durch einen Klebevorgang. Hierzu wurde im Zwischenraum zwischen der Rückseite der Plakette und der Vorderseite der Kunststoff-Abdeckkappe ein geeigneter Kleber eingebracht, der nach Aushärtung die geforderte, feste Verbindung zwischen der Plakette und der Abdeckkappe gewährleistete.

Eine solche Klebeverbindung ist nicht nur aus Umweltschutzgründen bedenklich, sondern es kam vor, dass der Kleber nicht vollflächig aufgebracht wurde, wodurch sich Luftblasen bildeten und die Plakette nicht vollflächig (und stoffschlüssig) auf der Vorderseite der Abdeckkappe anlag.

Ebenso konnte es vorkommen, dass sich während des Klebevorganges die Plakette - unerwünscht - über die Oberfläche der Abdeckkappe empor wölbte, so dass sie hohl lag. Neben einer beeinträchtigten Verbindung bestand der weitere Nachteil darin, dass bei entsprechendem Steinschlag auf die Plakette die hohl liegenden Stellen verbeult wurden, wodurch die Plakette schnell ein unschönes Aussehen erhielt.

Die Herstellung einer Klebeverbindung führte im Übrigen zu einem zusätzlichen Arbeitsgang, was mit zusätzlichen Herstellungskosten verbunden war.

Der Erfindung liegt deshalb die Aufgabe zugrunde, eine Abdeckkappe mit einer metallischen Plakette für Kraftfahrzeuge der eingangs genannten Art so weiterzubilden, dass sie kostengünstiger herstellbar ist, dass auf umweltschädliche Klebeverbindung verzichtet werden kann und dass insgesamt die Verbindung zwischen der Plakette und der Abdeckkappe zuverlässiger ist.

Zur Lösung der gestellten Aufgabe ist die Erfindung durch die technische Lehre des Anspruches 1 gekennzeichnet.

Wesentliches Merkmal der Erfindung ist, dass nun auf einen Klebeverbund zwischen der Rückseite der Plakette und der Vorderseite der Abdeckkappe verzichtet wird und statt dessen an der Plakette abgebogene Ansätze angeordnet sind, die aus der Ebene der Plakette in Richtung auf die Abdeckkappe gerichtet sind.

Die Herstellung einer solchen Plakette ist besonders einfach, denn sie wird insgesamt als flache Platine in einem Stanzwerkzeug hergestellt, wobei gleichzeitig die geforderten Ansätze mitausgestanzt werden.

In einem nachfolgenden Biegevorgang wird die Plakette in gewünschter Weise bombiert und gleichzeitig werden im gleichen Werkzeug die Ansätze entsprechend umgebogen.

In dieser vorbereiteten und umgebogenen Form wird die Plakette in eine Spritzgussform eingelegt, in der die Abdeckkappe im Spritzgussverfahren hergestellt wird.

In diesem Spritzgussverfahren wird somit ein einwandfreier Verbund zwischen der Plakette und der Abdeckkappe hergestellt, weil die Abdeckkappe sozusagen an die Rückseite der Plakette angespritzt oder angegossen wird.

Damit besteht gegenüber dem Stand der Technik der Vorteil, dass ein Hohlliegen der Plakette auf der Oberfläche der Abdeckkappe nicht mehr zu befürchten ist. Auf den aufwändigen und umweltbedenklichen Vorgang des Klebens kann nun verzichtet werden.

Dadurch, dass die am Umfangsrand der Plakette angeordneten Ansätze fest und abgedichtet in das Kunststoffmaterial der Abdeckkappe eingebettet werden, ergeben sich besondere Vorteile beim Korrosionsschutz.

Erfindungsgemäß wird die Sichtseite der Abdeckkappe vor dem Einbetten in das Kunststoffmaterial der Abdeckkappe mit einem Schutzüberzug versehen. Dadurch wird gewährleistet, dass auch die Ansätze mit diesem Schutzüberzug versehen sind.

Beim Einbetten der Plakette in das Kunststoffmaterial der Abdeckkappe werden somit auch die Ansätze in das Kunststoffmaterial eingebettet und der Schutzüberzug auf der Sichtseite der Plakette reicht ununterbrochen in das Kunststoffmaterial der Abdeckkappe hinein.

Weiterer Vorteil der Erfindung ist, dass durch das Einbetten von einer metallischen Plakette abstehender Ansätze in das Kunststoffmaterial einer Abdeckkappe auch entsprechende Temperaturausgleichs-Erscheinungen zwischen dem Kunststoffmaterial der Abdeckkappe und dem Metallmaterial der Plakette berücksichtigt werden können.

Wenn die Ansätze nicht in einem Winkel von 90° zur Abdeckkappe nach oben hin abgebogen werden, sondern beispielsweise in einem Winkel 100° oder 110°, besteht der Vorteil, dass bei einer größeren Temperaturausdehnung der metallischen Plakette im Vergleich zu der geringeren Temperaturausdehnung des Kunststoffmaterials sich gleichwohl nicht die Plakette von der Oberfläche der Abdeckkappe abhebt.

Ein Längenausgleichsspiel der Abdeckkappe wird von den umgebogenen und dem sich hieraus ergebenden Verformungsspiel der schwalbenschwanzförmigen Ansätze aufgefangen, so dass unabhängig von hohen Temperaturen stets eine satte Anlage der metallischen Plakette auf der Oberfläche der Abdeckkappe gewährleistet ist.

Die am Außenumfang der metallischen Plakette angeordneten Ansätze können auch noch zu einer lagengenauen Positionierung der Plakette in der Spritzgussform verwendet werden.

Wenn beispielsweise zwischen jeweils zwei mittig und gegenüberliegend angeordneten Ansätzen jeweils v-förmig nach außen sich erweiternde Ausnehmungen angeordnet werden, während die zwischen den anderen Ansätzen angeordneten Ausnehmungen eine andere Form aufweisen, ergibt sich der Vorteil, dass mit entsprechenden Führungsstiften in die v-förmig sich nach außen erweiternden Ausnehmungen eingegriffen werden kann und - solange diese Eingriffsposition besteht - sichergestellt ist, dass die mit den Führungsstiften erfasste Plakette genau ausgerichtet im Spitzgusswerkzeug fixiert ist.

Ein schräger Versatz, eine Drehung oder gar eine Über-Kopf-Stellung wird so verhindert.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere wesentliche Merkmale und Vorteile der Erfindung hervor.

Es zeigen:
- Fig. 1:: schematisiert eine Draufsicht auf eine metallische Platine vor deren Umformung zu einer Plakette;
- Fig. 2:: die Einbettung einer umgeformten Plakette in das Kunststoffmaterial einer Abdeckkappe im Schnitt;
- Fig. 3:: Schnitt durch die fertig montierte Abdeckkappe mit Plakette.

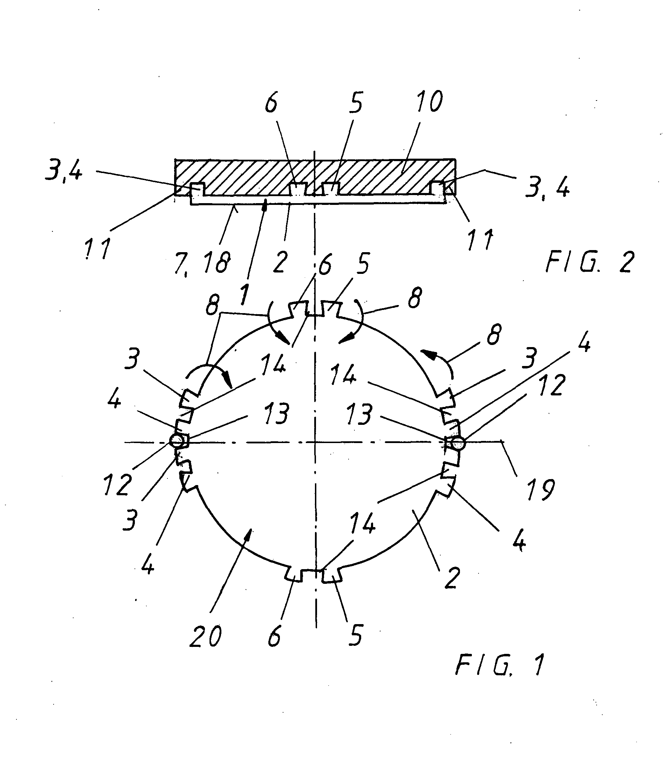

Figur 1 zeigt allgemein eine Metall-Platine als scheibenförmiger Körper, an dessen Außenumfang radial nach außen sich erstreckende Ansätze 3-6 angeformt sind. Eine solche Platine wird bevorzugt aus einer Leichtmetall-Legierung hergestellt. Die Erfindung betrifft jedoch auch alle anderen Werkstoffe, die im Stanzverfahren bearbeitet werden können. Insbesondere betrifft die Erfindung auch Schichtwerkstoffe, z. B. Aluminium-Kunststoff-Verbundstoffe und dergleichen mehr.

Erfindungsgemäß sind am Außenumfang der Platine eine Reihe von radial auswärtsgerichteten Ansätze 3-6 angeordnet, wobei jeder Ansatz bevorzugt eine Schwalbenschwanzform aufweist. Um eine lagenrichtige Zuordnung der späteren Plakette 1 im Kunststoffspritzgusswerkzeug zu ermöglichen, ist vorgesehen, dass im Bereich der horizontalen Mittellinie 19 die einander gegenüberliegend und spiegelsymmetrisch zueinander zugeordneten Ansätze 3, 4 zwischen sich eine v-förmige Ausnehmung 13 bilden, während zwischen den übrigen Ansätzen 5, 6 schwalbenschwanzförmige Ausnehmungen 14 gebildet werden.

Durch Eingriff von Führungsstiften 12 in die v-förmig nach außen sich erweiternden Ausnehmungen 13 kann somit die Platine 20 lagenrichtig in einem Stanz- und Umformwerkzeug und später in einem Spritzgusswerkzeug gehalten werden.

In einem weiteren Arbeitsschritt wird die Platine 20 nach Figur 1 in ein Umformwerkzeug eingelegt, wo das Bodenteil 2 leicht bombiert wird und gleichzeitig die Ansätze 3-6 in Pfeilrichtung 8 nach oben (senkrecht zur Zeichenebene der Figur 1) abgebogen wird. Es wurde im allgemeinen Beschreibungsteil darauf hingewiesen, dass Abbiegungen im Bereich von 60° bis 110° vorgesehen sind, wobei Abbiegungen im Bereich von 90° bis 110° bevorzugt werden.

Nachdem Umformvorgang wird die Sichtfläche 7 mit einer Schutzschicht 18 versehen.

Das so vorbereitete Halbzeug wird nun in eine Spritzgussform eingelegt und von der Rückseite her mit dem Kunststoffmaterial zur Ausbildung eines Trägerteils 10 angespritzt.

Hierbei greifen die Ansätze 3-6 formschlüssig und abdichtend in das Kunststoffmaterial des Trägerteils 10 ein und die Schutzschicht 18 wird ohne Unterbrechung in das Kunststoffmaterial fortgesetzt.

Hierbei wird es bevorzugt, wenn das Trägerteil 10 mit seinem Kunststoffmaterial über die Stirnseite 11 der Plakette 1 angespritzt wird. Auf diese Weise sind die Stirnseiten der Plakette 1 gegen Steinschlag und Korrosionsangriff optimal geschützt.

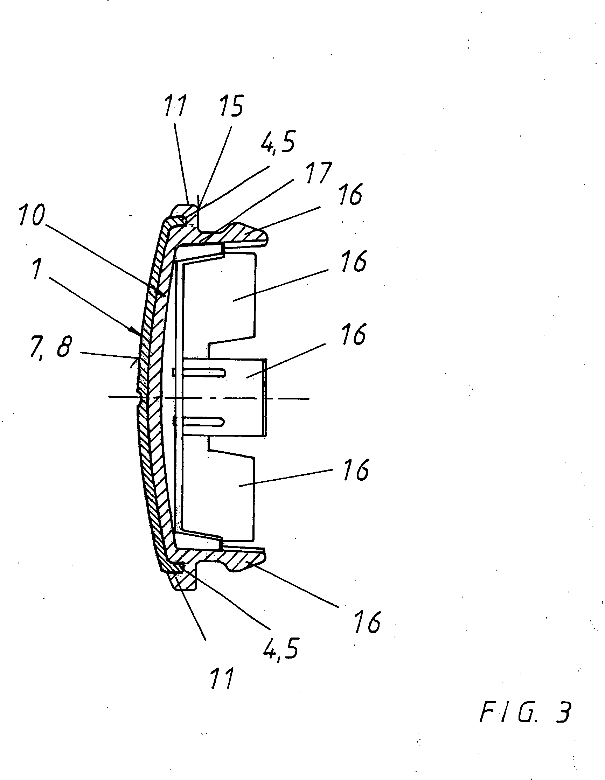

Figur 3 zeigt die fertiggestellte Abdeckkappe mit der im Kunststoffmaterial des Trägerteils 10 eingebetteten Plakette 1.

Es ist erkennbar, dass das Trägerteil 10 sich in Rastlappen 16 fortsetzt und - um eine gute Biegbarkeit der Rastlappen zu erreichen - Querschnittsverdüngungen sind im Kunststoffmaterial des Trägerteils 10 vorgesehen.

Gleichzeitig bildet das Trägerteil 10 horizontale Anschlagflächen 15, mit denen die gesamte Abdeckkappe in eine zugeordnete Ausnehmung am Kühlergrill oder der Frontseite des Kraftfahrzeuges eingesetzt werden kann und die Anschlagflächen 15 an der entsprechenden Karosseriefläche anliegen.

Die Rastlappen 16 hintergreifen dann diese Ausnehmung und legen sich federnd an die Rückseite dieser Ausnehmung an.

### Zeichnungslegende

- 1: Plakette
- 2: Bodenteil
- 3: Ansätze
- 4: Ansätze
- 5: Ansätze
- 6: Ansätze
- 7: Sichtfläche
- 8: Pfeilrichtung
- 9 10: Trägerteil
- 11: Stirnseite
- 12: Führungsstift
- 13: Ausnehmung (v-förmig)
- 14: Ausnehmung (Schwalbenschwanz)
- 15: Anschlagfläche
- 16: Rastlappen
- 17: Querschnittsverdünnung
- 18: Schutzschicht
- 19: Mittellinie
- 20: Platine

## Patentansprüche

1. Abdeckkappe mit einer metallischen Plakette für Kraftfahrzeuge, bestehend aus einem aus Kunststoff bestehenden Trägerteil (10), auf dessen Vorderseite die Plakette (1) befestigt ist,
**dadurch gekennzeichnet, dass** die Verbindung zwischen der Plakette (1) und dem Trägerteil (10) aus am Außenumfang der Plakette (1) angeformten, biegbaren Ansätzen (3-6) besteht, die aus der Ebene der Plakette (1) abgebogen sind und in das Kunststoffmaterial des Trägerteils (10) eingreifen und dort eingegossen oder eingespritzt sind.

2. Abdeckkappe nach Anspruch 1,
**dadurch gekennzeichnet, dass** die Ansätze (3-6) eine Schwalbenschwanzform haben.

3. Abdeckkappe nach Anspruch 1 oder 2,
**dadurch gekennzeichnet, dass** die Ansätze (3-6) Widerhaken aufweisen.

4. Abdeckkappe nach einem der Ansprüche 1 bis 3,
**dadurch gekennzeichnet, dass** mindestens die Sichtfläche (7) der Plakette (1) mit einer Schutzschicht (18) beschichtet ist, die sich über die Stirnseiten der Plakette (1) in das Kunststoffmaterial der Abdeckkappe (10) hinein erstreckt.

5. Abdeckkappe nach einem der Ansprüche 1 bis 4,
**dadurch gekennzeichnet, dass** die biegbaren Ansätze (3-6) zwischen sich schwalbenschwanzförmige Ausnehmungen (14) bilden.

6. Abdeckkappe nach Anspruch 5,
**dadurch gekennzeichnet, dass** zwischen zwei jeweils mittig und gegenüberliegend angeordneten Ansätzen (3, 4) v-förmig nach außen sich erweiternde Ausnehmungen (13) für den Eingriff von Führungsstiften (12) angeordnet sind.
